(19) Europäisches Patentamt
European Patent Office
Office européen des brevets

(11) EP 2 483 711 B1

(12) **FASCICULE DE BREVET EUROPEEN**

(45) Date de publication et mention de la délivrance du brevet:
**25.09.2013 Bulletin 2013/39**

(21) Numéro de dépôt: **10759628.0**

(22) Date de dépôt: **27.09.2010**

(51) Int Cl.:
***G01T 3/00*** *(2006.01)* ***G21C 17/108*** *(2006.01)*

(86) Numéro de dépôt international:
**PCT/EP2010/064220**

(87) Numéro de publication internationale:
**WO 2011/036282 (31.03.2011 Gazette 2011/13)**

(54) **PROCEDE DE DETERMINATION DU RAPPORT ISOTOPIQUE DE MATIERE FISSILE CONTENUE DANS UNE CHAMBRE A FISSION**

VERFAHREN ZUR BESTIMMUNG DES ISOTOPENVERHÄLTNISSES VON SPALTSTOFFEN IN EINER SPALTKAMMER

METHOD FOR DETERMINING THE ISOTOPE RATIO OF FISSILE MATERIAL CONTAINED IN A FISSION CHAMBER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **28.09.2009 FR 0956692**

(43) Date de publication de la demande:
**08.08.2012 Bulletin 2012/32**

(73) Titulaire: **Commissariat à l'Énergie Atomique et aux Énergies Alternatives**
**75015 Paris (FR)**

(72) Inventeurs:
- **VAGLIO-GAUDARD, Claire**
**F-13770 Venelles (FR)**
- **GIRARD, Jean-Michel**
**F-13100 Aix-en-Provence (FR)**
- **LECONTE, Pierre**
**F-13100 Aix-en-Provence (FR)**

(74) Mandataire: **Ilgart, Jean-Christophe et al**
**Brevalex**
**95, rue d'Amsterdam**
**FR-75378 Paris Cedex 8 (FR)**

(56) Documents cités:
**EP-A1- 0 596 814** **EP-A1- 0 715 186**
**EP-B1- 1 335 201**

- **BOUCHARD J ET AL: "The burn-up and fuel cycle aspects of LMFBR physics assessment", PROGRESS IN NUCLEAR ENERGY, PERGAMON PRESS, OXFORD, GB LNKD- DOI: 10.1016/0149-1970(85)90011-3, vol. 16, no. 3, 1 janvier 1985 (1985-01-01), pages 251-285, XP025414445, ISSN: 0149-1970 [extrait le 1985-01-01]**
- **FILLIATRE P ET AL: "Reasons why Plutonium 242 is the best fission chamber deposit to monitor the fast component of a high neutron flux", NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL LNKD- DOI: 10.1016/J.NIMA.2008.05.049, vol. 593, no. 3, 11 août 2008 (2008-08-11) , pages 510-518, XP025472040, ISSN: 0168-9002 [extrait le 2008-06-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 483 711 B1

## Description

Domaine technique et art antérieur

L'invention concerne un procédé de détermination de rapport isotopique de matière fissile.

La mesure par chambre à fission permet de remonter à la puissance d'un réacteur nucléaire ou d'obtenir des taux de fission caractéristiques d'un flux neutronique à certains emplacements du coeur sur une gamme énergétique donnée (cas d'une chambre à fission miniature utilisée dans un réacteur expérimental pour mesurer une atténuation de flux en réflecteur par exemple).

Une chambre à fission est constituée d'une enceinte étanche remplie d'un gaz inerte à fort pouvoir d'ionisation. De la matière fissile est déposée à l'intérieur de la chambre à fission sur un élément formant anode, l'enceinte étanche formant cathode. Lorsque les neutrons dont le flux est à mesurer entrent en contact avec la matière fissile, la fission se produit et il y a émission de deux fragments de fission qui partent à 180° l'un de l'autre. L'un des deux fragments est stoppé dans l'anode et l'autre ionise le gaz, avant d'être arrêté par la cathode. L'ionisation du gaz conduit à la création d'électrons dans la chambre à fission. Les électrons créés par ionisation sont alors collectés par la cathode et transmis à une chaîne de traitement électronique via un câble coaxial. Le nombre d'électrons créés est directement proportionnel au flux de neutrons qui est à l'origine de la fission.

La connaissance des impuretés présentes dans une chambre à fission est cruciale pour une interprétation correcte des mesures. Dans le cas où la matière fissile est, par exemple, de l'Uranium $^{238}U$, il est possible que plusieurs dizaines de pourcents du signal détecté provienne d'impuretés d'Uranium $^{235}U$. Il est ainsi nécessaire de connaître le rapport isotopique $^{235}U/^{238}U$ avec la plus grande précision afin de pouvoir extraire le signal utile du signal détecté. L'incertitude associée à la connaissance de ce rapport isotopique doit donc être la plus faible possible, idéalement de l'ordre de quelques pourcents.

A ce jour, plusieurs méthodes sont connues pour déterminer ce rapport isotopique. Une première méthode consiste à dissoudre le matériau concerné ou un échantillon de ce matériau et à effectuer une analyse chimique du matériau dissous. Par cette méthode, il est possible d'atteindre la connaissance de l'isotopie du matériau avec une précision inférieure au pourcent. Un inconvénient majeur de cette méthode est son caractère destructeur du matériau. En plus de son caractère destructeur, un autre inconvénient de cette méthode réside dans la génération d'effluents qu'il faut - in fine - traiter.

Une autre méthode est l'interrogation neutronique. L'interrogation neutronique présente l'avantage de ne pas être destructive. Un inconvénient de l'interrogation neutronique est toutefois de ne pas pouvoir être réalisée sur une faible quantité de matériau (quelques centaines de microgrammes dans le cas d'une chambre à fission miniature).

D'autres méthodes sont également connues, comme, par exemple, l'étalonnage par rapport à une chambre étalon ou l'utilisation de spectres différents et de matériaux ayant des caractéristiques neutroniques particulières. Ces autres méthodes présentent l'inconvénient d'être difficiles à mettre en oeuvre et de fournir des résultats relativement imprécis.

Enfin, de Bouchard et al., "The burn- up and fuel cycle aspects of LMFBR physics assessment", Progress in Nuclear Energy, vol. 16, no. 3, 1985, pages 251- 285, on connait un procédé de mesure de la puissance d'un réacteur nucléaire au moyen d'une chambre à fission, comprenant une étape de calibration du système de détection.

L'invention ne présente pas les inconvénients mentionnés ci-dessus. L'invention propose en effet de mesurer le rapport isotopique en mettant en oeuvre un procédé qui ne détruit pas la chambre à fission et dont l'incertitude est de l'ordre de quelques pourcents (typiquement inférieure à 10%).

Exposé de l'invention

L'invention concerne un procédé de détermination de rapport isotopique de matière fissile contenue dans une chambre à fission, la matière fissile ayant un isotope principal X et au moins un isotope d'impureté Y, les isotopes X et Y ayant une décroissance radioactive selon les deux équations suivantes :

X -> X' caractérisée par $\lambda_X$, $F_X$, et
Y -> Y' caractérisée par $\lambda_Y$, $F_Y$,

où X' et Y' sont des isotopes « fils » respectifs des isotopes X et Y, la décroissance de l'isotope X (respectivement Y) étant caractérisée par l'émission d'une particule gamma par l'isotope fils X' (respectivement Y') à une énergie $E_1$ (respectivement $E_2$) suivant une probabilité d'émission $I\gamma(E_1)$ (respectivement $I\gamma(E_2)$), les grandeurs $\lambda_X$ et $\lambda_Y$ étant, respectivement, la constante de décroissance radioactive de l'isotope principal X et la constante de décroissance radioactive de l'isotope d'impureté Y, et $F_X$ et $F_Y$ étant, respectivement, un rapport de branchement de décroissance d'isotope utilisé pour une mesure d'activité de l'isotope principal et un facteur de branchement de décroissance d'isotope utilisé pour

une mesure d'activité de l'isotope d'impureté.

Le procédé est caractérisé en ce qu'il comprend les étapes suivantes :

- mesure, à l'aide d'un banc de spectrométrie placé dans une configuration de mesure donnée, d'une surface nette $S(E_1)$ d'un premier pic gamma de la matière fissile à une première énergie $E_1$ et d'une surface nette $S(E_2)$ d'un deuxième pic gamma de la matière fissile à une deuxième énergie $E_2$,
- détermination, à l'aide de sources ponctuelles de référence, dans la configuration de mesure donnée, d'un rendement d'absorption totale de référence $R_o^P(E_1)$ à la première énergie $E_1$ et d'un rendement d'absorption totale de référence $R_o^P(E_2)$ à la deuxième énergie $E_2$,
- calcul, à l'aide d'un calculateur, dans la configuration de mesure donnée, d'un transfert de rendement intégral $T(E_1)$ de la matière fissile à la première énergie $E_1$ et d'un transfert de rendement intégral $T(E_2)$ de la matière fissile à la deuxième énergie $E_2$, et
- calcul, à l'aide d'un calculateur, du rapport isotopique de matière fissile R à l'aide de l'équation :

$$R = \frac{\lambda_X}{\lambda_Y} \times \frac{S(E_2)}{S(E_1)} \times \frac{I_Y(E_1)}{I_Y(E_2)} \times \frac{R_0^P(E_1)}{R_0^P(E_2)} \times \frac{T(E_1)}{T(E_2)} \times \frac{F_X}{F_Y}$$

Par banc de spectrométrie placé dans une configuration de mesure donnée, il faut entendre que les différents éléments qui constituent le banc de spectrométrie sont placés, les uns par rapport aux autres, selon une géométrie qui n'est pas modifiée d'une mesure à l'autre.

Les mesures de surface nette sont effectuées soit avant que la matière fissile ne soit introduite dans la chambre à fission, soit après introduction de la matière fissile dans la chambre à fission. Dans le premier cas, les mesures sont effectuées soit sur un échantillon du bloc de matière fissile, soit sur le bloc de matière fissile dans son entier. Dans le deuxième cas, les mesures sont effectuées sur la chambre à fission dans son entier.

Le procédé de l'invention permet avantageusement une détermination facile et performante du rapport isotopique de matière fissile sur la base de mesures de rayonnements gamma et de données de bibliothèque.

De façon avantageuse également, la mesure des surfaces nettes est effectuée pendant une durée suffisamment longue qui permet d'obtenir une faible incertitude de comptage (la durée de mesures des surfaces nettes est en effet comprise entre une heure et quelques semaines, par exemple entre une heure et dix semaines).

## Brève description des figures

D'autres caractéristiques et avantages de l'invention apparaîtront à la lecture d'un mode de réalisation préférentiel fait en référence aux figures jointes parmi lesquelles :

- La figure 1 représente un schéma de principe de dispositif utilisé pour la mise en oeuvre du procédé de l'invention ;
- La figure 2 représente un schéma de principe du procédé de l'invention ;
- La figure 3 représente une vue de détail d'une première étape du procédé de l'invention ;
- La figure 4 représente une vue de détail d'une deuxième étape du procédé de l'invention; et
- La figure 5 représente une vue de détail d'une troisième étape du procédé de l'invention.

## Exposé détaillé d'un mode de réalisation préférentiel de l'invention

Selon le mode de réalisation préférentiel de l'invention décrit ci- dessous, le matériau fissile est l'Uranium $^{238}U$ et les impuretés sont constituées d'Uranium $^{235}U$. L'invention concerne cependant tout autre matériau fissile ainsi que toute impureté associée à cet autre matériau fissile. Le matériau fissile peut être, par exemple $^{240}\mathbf{Pu}$, $^{242}\mathbf{Pu}$, $^{243}\mathbf{Am}$, $^{232}\mathbf{Th}$ et l'impureté associée peut être, par exemple, $^{239}\mathbf{Pu}$, $^{241}\mathbf{Am}$, $^{233}\mathbf{Th}$.

Dans le cas où le matériau fissile est l'Uranium $^{238}U$ et où les impuretés sont constituées d'Uranium $^{235}U$, le rapport isotopique R est donné par l'équation (1) ci-dessous:

$$R = \frac{\lambda_{U238}}{\lambda_{U235}} \times \frac{A_{U235}}{A_{U238}} \quad (1)$$

où $A_{U238}$ et $A_{U235}$ sont, respectivement, l'activité de l'Uranium $^{238}U$ et l'activité de l'Uranium $^{235}U$ et $\lambda_{U238}$ et $\lambda_{U235}$ sont, respectivement, la constante de décroissance radioactive de l'Uranium $^{238}U$ et la constante de décroissance radioactive de l'Uranium $^{235}U$.

Le schéma de décroissance de l'Uranium $^{238}U$ et de l'uranium $^{235}U$ s'écrit :

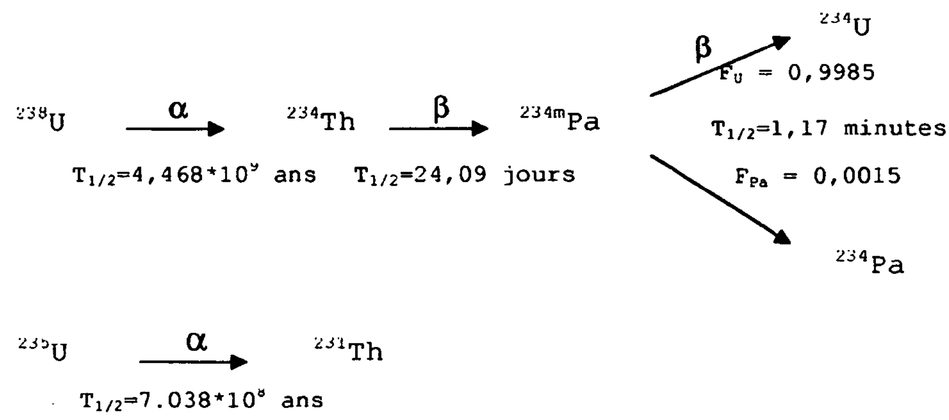


où le symbole « α » représente la décroissance par émission de particules α, le symbole « β » la décroissance par émission de particules β, $T_{1/2}$ la demi- vie de l'isotope concerné, $F_U$ le rapport de branchement de décroissance de l'isotope $^{234m}Pa$ vers $^{234}U$, c'est- à- dire la probabilité pour le Protactinium $^{234m}Pa$ de se désintégrer en Uranium $^{239}U$ et $F_{Pa}$ le rapport de branchement de décroissance de l'isotope $^{234m}Pa$ vers $^{234}Pa$, c'est- à- dire la probabilité pour le Protactinium $^{234m}Pa$ de se désintégrer en Protactinium $^{234}Pa$ ($F_U+F_{Pa}=1$) .

A l'équilibre séculaire (également appelé équilibre nucléaire), le schéma de décroissance de l'Uranium $^{238}U$ conduit donc à exprimer l'activité $A_{U238}$ de l'Uranium $^{238}U$ par rapport à l'activité $A_{Pa234m}$ du Protactinium $^{234m}Pa$ comme suit :

$$A_{U238} = \frac{1}{F_U} \times A_{Pa234m} \quad (2)$$

D'où :

$$R = \frac{\lambda_{U238}}{\lambda_{U235}} \times \frac{A_{U235}}{A_{Pa234m}} \times F_U \quad (3)$$

Les deux raies gamma traditionnellement mesurées pour quantifier les activités de l'Uranium $^{235}U$ et du Protactinium $^{234m}Pa$ sont les raies à 185, 7keV (intensité de 57,0 %) et à 1001keV (intensité de 0,839%). Ce sont ces deux raies qui sont mesurées dans le cadre du mode de réalisation préférentiel de l'invention.

L'activité A d'un isotope quelconque calculée à partir de la mesure d'une de ses raies d'émission gamma d'énergie $E_0$ est donnée par la formule suivante :

$$A = \frac{S(E_0)C_{coinc}(E_0)}{I_\gamma(E_0)R_0^P(E_0)T(E_0)\Delta t_{act}} \quad (4)$$

où :

- $S(E_0)$ est la surface nette du pic gamma à l'énergie $E_0$, dans la configuration de mesure donnée;
- $C_{coinc}$ ($E_0$) est la correction de coïncidences vraies (détection simultanée de rayonnements émis lors d'une même désintégration radioactive), dans la configuration de mesure donnée ;

- $I\gamma(E_0)$ est la probabilité d'émission ou intensité de la raie gamma d'énergie $E_0$ pour l'isotope fils de l'isotope considéré;
- $R_0^P(E_0)$ est le rendement d'absorption totale de référence à l'énergie $E_0$, qui est obtenu par étalonnage du détecteur gamma à l'aide d'une source étalon ponctuelle, dans la configuration de mesure donnée ;
- $T(E_0)$ est le transfert de rendement intégral qui permet de corriger les effets d'angle solide et de matrice dans la configuration de mesure donnée (hétérogénéité des sources et autoabsorption gamma dus à la mesure d'un objet dans une configuration différente de celle utilisée lors de l'étalonnage) ;
- $\Delta t_{act}$ est la durée de mesure active, c'est-à-dire la durée de mesure corrigée du temps mort électronique.

De l'expression de A ci-dessus, il découle que le rapport isotopique R pour l'Uranium $^{238}U$ s'écrit :

$$R = \frac{\lambda_{U238}}{\lambda_{U235}} \times \frac{S(185.7keV)}{S(1001keV)} \times \frac{I_\gamma(1001keV)}{I_\gamma(185,7keV)} \times \frac{R_0^P(1001keV)}{R_0^P(185,7keV)} \times \frac{T(1001keV)}{T(185,7keV)} \times F_U \quad (5)$$

où :

- $\lambda_{U235}$ est une donnée connue dans les bases de données internationales ($\lambda_{U235}$=ln (2) / (2, 22102 $10^{16}$) $s^{-1}$) ;
- $\lambda_{U238}$ est une donnée connue dans les bases de données internationales ($\lambda_{U238}$=ln (2) / (1, 40996 $10^{17}$) $s^{-1}$) ;
- S (185, 7keV) est une grandeur mesurée;
- S(1001keV) est une grandeur mesurée;
- $I\gamma$ (1001keV) est une donnée connue dans les bases de données internationales ($I\gamma$ (1001kev) =0, 00839) ;
- $I\gamma$ (185, 7keV) est une donnée connue dans les bases de données internationales ($I\gamma$ (185, 7kev) =0, 570) ;
- $R_0^P$ (1001keV) est une grandeur mesurée par étalonnage;
- $R_0^P$ (185, 7keV) est une grandeur mesurée par étalonnage ;
- T(1001keV) est une grandeur calculée par modélisation ;
- T (185, 7keV) est une grandeur calculée par modélisation ;
- $F_U$ est une donnée connue dans les bases de données internationales.

L'équation (5) ci-dessus concerne le cas où le matériau fissile est l'Uranium $^{238}U$ (isotope principal) et l'impureté l'Uranium $^{235}U$ (isotope d'impureté associé), les raies gamma utilisées pour quantifier les activités de l'isotope principal et de l'isotope d'impureté étant respectivement les raies à 1001keV et 185,7keV.

Dans le cas général d'un matériau fissile X (isotope principal) et d'une impureté associée Y (isotope d'impureté), les raies gamma utilisées pour quantifier les activités de l'isotope principal et de l'isotope d'impureté étant, respectivement, une raie d'énergie $E_1$ et une raie d'énergie $E_2$, le rapport isotopique R s'écrit :

$$R = \frac{\lambda_X}{\lambda_Y} \times \frac{S(E_2)}{S(E_1)} \times \frac{I_\gamma(E_1)}{I_\gamma(E_2)} \times \frac{R_0^P(E_1)}{R_0^P(E_2)} \times \frac{T(E_1)}{T(E_2)} \times \frac{F_X}{F_Y} \quad (6)$$

où :

- $\lambda_X$ est la constante de décroissance radioactive de l'isotope principal de la matière fissile destinée à équiper la chambre à fission,
- $\lambda_Y$ est la constante de décroissance radioactive de l'isotope d'impureté associé à l'isotope principal,
- $S(E_1)$ est la surface nette d'un premier pic gamma de la matière fissile à l'énergie $E_1$ et $S(E_2)$ la surface nette d'un deuxième pic gamma de la matière fissile à l'énergie $E_2$,
- $R_o^P(E_1)$ est le rendement d'absorption totale de référence à l'énergie $E_1$ et $R_o^P(E_2)$ le rendement d'absorption totale de référence à l'énergie $E_2$,
- $T(E_1)$ est le rendement intégral de la matière fissile à l'énergie $E_1$ et $T(E_2)$ le rendement intégral de l'échantillon de la matière fissile à l'énergie $E_2$,
- $I\gamma(E_1)$ et $I\gamma(E_2)$ sont, respectivement, la probabilité d'émission de raie gamma du « fils » de l'isotope principal à l'énergie $E_1$ et la probabilité d'émission de raie gamma du « fils » de l'isotope d'impureté à l'énergie $E_2$,
- $F_X$ est le rapport de branchement de décroissance d'un isotope utilisé pour mesurer l'activité de l'isotope principal, et
- $F_Y$ est le rapport de branchement de décroissance d'un isotope utilisé pour mesurer l'activité de l'isotope d'impureté.

Comme cela a été mentionné précédemment avec l'exemple de l'Uranium $^{238}U$ et de l'Uranium $^{235}U$, les rapports de branchement de décroissance sont des probabilités connues liées au mode de désintégration des isotopes. Dans le cas où l'isotope utilisé pour mesurer l'activité se désintègre de manière univoque, le rapport de branchement de décroissance est égal à 1 et, dans le cas où la désintégration n'est pas univoque, le rapport de branchement est égal à la probabilité associée à la désintégration choisie.

La figure 1 représente un schéma de principe de dispositif utilisé pour la mise en oeuvre du procédé de l'invention.

Le dispositif comprend un banc Sp de spectrométrie gamma et un calculateur K.

Le banc Sp de spectrométrie gamma délivre des signaux de mesure Sm qui sont transmis au calculateur K. Le banc de spectrométrie Sp est constitué d'une enceinte E dans laquelle est placé un détecteur D. Le détecteur D, préférentiellement une diode en germanium de grande pureté, est un détecteur de rayons gamma qui présente une bonne efficacité sur un large domaine d'énergie, par exemple des énergies allant de 50keV à 2MeV. De façon préférentielle, le détecteur D présente également une aptitude à limiter l'effet Compton. De la matière fissile est placée dans l'enceinte E. La référence B sur la figure 1 représente cette matière fissile : il s'agit soit d'un échantillon du bloc de matière fissile destiné à équiper la chambre à fission, soit du bloc de matière fissile lui-même, soit de la chambre à fission dans son entier équipée du bloc de matière fissile. L'interaction des rayons gamma issus de la matière fissile B avec le détecteur D conduit à une ionisation des atomes du milieu détecteur. Les charges ainsi crées sont collectées par une alimentation continue haute tension, par exemple une alimentation de quelques milliers de volts (non représentée sur la figure 1). L'enceinte E est préférentiellement une enceinte circulaire, constituée de matériaux permettant d'avoir un niveau très faible de bruit de fond, par exemple, un empilement de plomb basse activité, de plomb ultra basse activité, d'étain et de cuivre. Le refroidissement du détecteur est assuré par un système cryo-cycle qui permet un refroidissement hybride électrique/azote liquide. Ce système permet des durées d'acquisition de plusieurs semaines sans perturbation liée à l'apport en azote liquide.

Les signaux de mesure Sm construits à partir du rayonnement gamma sont transmis au calculateur K pour traitement. Le calculateur K met en oeuvre des procédés de traitement aptes à délivrer les grandeurs souhaitées.

Le procédé de l'invention va maintenant être décrit en référence aux figures 2-5.

Le procédé de l'invention comprend (cf. figure 2) une étape 1 de détermination des surfaces nettes S (185, 7keV) et S (1001keV) de la matière fissile, une étape 2 de détermination des rendements d'absorption totale de référence aux énergies de 185, 7keV et de 1001keV, $R_0^P$ (185, 7keV) et $R_0^P$ (1001keV), une étape 3 de détermination des transferts de rendement intégral aux énergies de 185, 7keV et de 1001kev, T (185, 7keV) et T (1001keV), et une étape 4 de calcul du rapport isotopique R à partir des résultats des étapes 1, 2 et 3 et de données D connues issues de bibliothèques de données. Les données D sont les données $\lambda_{U238}$, $\lambda_{U235}$, $I\gamma$ (185, 7keV), $I\gamma$ (1001keV) et $F_U$ définies précédemment.

L'étape 1 de détermination des surfaces nettes S (185, 7keV) et S (1001keV) comprend une étape la de mesure de spectre gamma de la matière fissile B. La mesure du spectre gamma est effectuée, à l'aide du banc de mesure Sp, sur une bande d'énergie qui comprend les raies utiles à 185, 7keV et 1001keV. L'étape la (Figure 3) est suivie d'une étape 1b d'extraction, à l'aide du calculateur K, des surfaces nettes des raies à 185, 7keV et 1001keV. Une mesure de bruit de fond gamma est également effectuée, à l'aide du banc de mesure Sp, sur la même bande d'énergie lors de l'étape 1N, pour mesurer les éventuels pics gamma du bruit de fond aux énergies $E_1$ et $E_2$ se superposant aux pics déterminés dans la mesure de l'étape 1a. A partir des résultats obtenus à l'issue des étapes 1b et 1N, le calculateur K calcule, à l'étape 1c, les surfaces nettes S (185, 7keV) et S (1001keV) . Le logiciel de calcul utilisé pour le calcul des surfaces nettes est, par exemple, le logiciel GENIE2000 dont le manuel d'utilisation est disponible sur le réseau Internet à l'adresse électronique suivants :

http://www.ipnas.ulg.ac.be/garnir/pdf/genie2000.pdf,

Tout autre type de logiciel connu de l'homme du métier et susceptible de conduire au résultat souhaité peut également être utilisé.

La figure 4 illustre les différentes étapes élémentaires qui composent l'étape 2 de détermination des rendements d'absorption totale de référence aux énergies de 185, 7keV et de 1001keV, $R_0^P$ (185, 7keV) et $R_0^P$ (1001keV) .

L'étape 2 de détermination des rendements d'absorption totale de référence $R_0^P$ (185, 7keV) et $R_0^P$ (1001keV) est une étape connue en soi. L'étape 2 commence par une étape 2a de choix de sources ponctuelles dont les activités sont bien connues. Chaque source ponctuelle j est caractéristique d'une émission de particules gamma à une énergie $E_j$ choisie dans une gamme énergétique connue, par exemple la gamme 50keV- 2MeV.

Chaque source ponctuelle j est placée dans l'enceinte pour la mesure de son activité (étape 2b). L'activité $A_m^P(E_j)$ de chaque source ponctuelle j à l'énergie $E_j$ est alors mesurée à l'aide du banc de mesure Sp et du calculateur K. Le rendement d'absorption totale de référence $R'_0{}^P(E_j)$ de chaque source ponctuelle à l'énergie $E_j$ est ensuite calculé, à l'étape 2c, à partir de l'activité mesurée $A_m^P(E_i)$ et de l'activité de la source ponctuelle qui est connue a priori $A_o^P(E_i)$. Il vient :

$$R'_o{}^P(E_j) = A_m{}^P(E_j) / A_o{}^P(E_j),$$

On obtient alors une courbe des rendements d'absorption totale de référence $R'_0{}^P$ ($E_j$) pour les différentes énergies $E_j$. La courbe des rendements $R'_0{}^P$ ($E_j$) est ensuite ajustée, à l'aide d'une fonction analytique Fa, par le calculateur K (étape 2d) . La fonction analytique Fa consiste par exemple à exprimer le logarithme népérien de $R'_o{}^P$ en fonction d'un polynôme de logarithme népérien de l'énergie. De la courbe ajustée délivrée à l'étape 2d sont déduites, à l'étape 2e, les valeurs des rendements d'absorption totale de référence aux énergies souhaitées de 185, 7keV et 1001keV, $R_0{}^P$ (185, 7keV) et $R_0{}^P$ (1001keV) .

La figure 5 illustre les différentes étapes élémentaires qui composent l'étape 3 de détermination des transferts de rendement intégraux.

L'étape 3 de détermination des transferts de rendement intégraux comprend, tout d'abord, une étape 3a de modélisation du banc de mesure équipé du détecteur D, une étape 3b de modélisation de l'élément mesuré lors de l'étape 1 de détermination des surfaces nettes (chambre à fission CH ou échantillon de bloc de matière fissile) et une étape 3c de modélisation des conditions d'utilisation de la source ponctuelle utilisée lors de la mesure des rendements d'absorption dans la même configuration de mesure du banc gamma que dans l'étape 3b. A partir des données de modélisation délivrées à l'issue des étapes 3a et 3b, une étape de calcul 3d calcule, par exemple par la méthode de Monte Carlo pour la résolution de l'équation de transport des photons, l'activité relative de l'élément modélisé déterminée par le détecteur D modélisé dans le calcul aux énergies respectives de 185, 7keV et 1001keV, à savoir les grandeurs $A_C{}^{CH}$ (185, 7keV) et $A_C{}^{CH}$ (1001keV) . De même, à partir des données de modélisation délivrées à l'issue des étapes 3a et 3c, l'étape de calcul 3d calcule, par exemple par la méthode de Monte Carlo, l'activité relative de la source ponctuelle déterminée par le détecteur D modélisé dans le calcul aux énergies de 185, 7keV et 1001keV, à savoir les grandeurs $A_C{}^P$ (185, 7keV) et $A_C{}^P$ (1001keV) .

A l'issue de l'étape 3d, une étape de calcul 3e calcule les grandeurs T (185, 7keV) et T (1001keV) à partir des activités calculées, à savoir :

$$T(185,7keV) = A_C{}^{CH}(185,7keV) / A_C{}^P(185,7keV)$$

$$T(1001keV) = A_C{}^{CH}(1001keV) / A_C{}^P(1001keV)$$

A partir de l'ensemble des grandeurs déterminées comme décrit ci-dessus et des données de bibliothèque mentionnées précédemment, il est alors possible de déterminer le rapport isotopique R tel que :

$$R = \frac{\lambda_{U238}}{\lambda_{U235}} \times \frac{S(185.7keV)}{S(1001keV)} \times \frac{I_\gamma(1001keV)}{I_\gamma(185,7keV)} \times \frac{R_0^P(1001keV)}{R_0^P(185,7keV)} \times \frac{T(1001keV)}{T(185,7keV)} \times F_U$$

ou, dans le cas général :

$$R = \frac{\lambda_X}{\lambda_Y} \times \frac{S(E_2)}{S(E_1)} \times \frac{I_\gamma(E_1)}{I_\gamma(E)} \times \frac{R_0^P(E_1)}{R_0^P(E_2)} \times \frac{T(E_1)}{T(E_2)} \times \frac{F_X}{F_Y} \; .$$

## Revendications

1. Procède de détermination de rapport isotopique de matière fissile contenue dans une chambre à fission, la matière fissile ayant un isotope principal X et au moins un isotope d'impureté Y, les isotopes X et Y ayant une décroissance

radioactive selon les deux équations suivantes :

X -> X' **caractérisée par** $\lambda_X$, $F_X$, et
Y -> Y' **caractérisée par** $\lambda_Y$, $F_Y$,

où X' et Y' sont des isotopes « fils » respectifs des isotopes X et Y, la décroissance de l'isotope X (respectivement Y) étant **caractérisée par** l'émission d'une particule gamma par l'isotope fils X' (respectivement Y') à une énergie E1 (respectivement $E_2$) suivant une probabilité d'émission $I\gamma(E_1)$ (respectivement $I\gamma(E_2)$), les grandeurs $\lambda_X$ et $\lambda_Y$ étant, respectivement, la constante de décroissance radioactive de l'isotope principal X et la constante de décroissance radioactive de l'isotope d'impureté Y, et $F_X$ et $F_Y$ étant, respectivement, un rapport de branchement de décroissance d'isotope utilisé pour une mesure d'activité de l'isotope principal et un rapport de branchement de décroissance d'isotope utilisé pour une mesure d'activité de l'isotope d'impureté, **caractérisé en ce qu'**il comprend les étapes suivantes :

- mesure, à l'aide d'un banc de spectrométrie placé dans une configuration de mesure donnée, d'une surface nette $S(E_1)$ d'un premier pic gamma de la matière fissile à une première énergie $E_1$ et d'une surface nette S $(E_2)$ d'un deuxième pic gamma de la matière fissile à une deuxième énergie $E_2$,
- détermination, à l'aide de sources ponctuelles de référence, dans la configuration de mesure donnée, d'un rendement d'absorption totale de référence $R_0^P(E_1)$ à la première énergie $E_1$ et d'un rendement d'absorption totale de référence $R_0^P(E_2)$ à la deuxième énergie $E_2$,
- calcul, à l'aide d'un calculateur, dans la configuration de mesure donnée, d'un transfert de rendement intégral $T(E_1)$ de la matière fissile à la première énergie $E_1$ et d'un transfert de rendement intégral $T(E_2)$ de la matière fissile à la deuxième énergie $E_2$, et
- calcul, à l'aide d'un calculateur, du rapport isotopique de matière fissile R à l'aide de l'équation :

$$R = \frac{\lambda_X}{\lambda_Y} \times \frac{S(E_2)}{S(E_1)} \times \frac{I_\gamma(E_1)}{I_\gamma(E_2)} \times \frac{R_0^P(E_1)}{R_0^P(E_2)} \times \frac{T(E_1)}{T(E_2)} \times \frac{F_X}{F_Y}$$

2. Procédé selon la revendication 1, dans lequel les mesures de surface nette de la matière fissile sont effectuées, avant introduction de la matière fissile dans la chambre à fission, sur un échantillon du bloc de la matière fissile destiné à équiper la chambre à fission.

3. Procédé selon la revendication 1, dans lequel les mesures de surface nette de la matière fissile sont effectuées, avant introduction de la matière fissile dans la chambre à fission, sur le bloc de matière fissile destiné à équiper la chambre à fission.

4. Procédé selon la revendication 1, dans lequel les mesures de surface nette de la matière fissile sont effectuées, après introduction de la matière fissile dans la chambre à fission, sur la chambre à fission dans son entier.

5. Procédé selon l'une quelconque des revendications précédentes, dans lequel l'isotope principal est l'Uranium $^{238}U$ et l'isotope d'impureté est l'Uranium $^{235}U$.

6. Procédé selon l'une quelconque des revendications précédentes, dans lequel la durée des étapes de mesure de surface nette est comprise entre une heure et dix semaines.

## Patentansprüche

1. Verfahren zum Bestimmen des Isotopenverhältnisses von in einer Spaltungskammer enthaltenem spaltbaren Material, das ein Hauptisotop X und wenigstens ein Verunreinigungs- bzw. Fremdisotop Y umfasst, wobei die Isotope X und Y jeweils einen radioaktiven Zerfall gemäß den beiden nachstehenden Gleichungen zeigen

X -> X' , charakterisiert durch $\lambda_X$, $F_Y$ und
Y -> Y', charakterisiert durch $\lambda_Y$, $F_Y$,

worin X' und Y' 'Tochter'-Isotope der Isotope X bzw. Y sind, der Zerfall des Isotops X (bzw. Y) durch die Emission

eines Gamma-Teilchens seitens dem 'Tochter'-Isotop X' (bzw. Y') bei einer Energie E1 (bzw. E2) gemäß einer Emissions-Wahrscheinlichkeit Iy(E1) (bzw. Iy(E2)) charakterisiert sind, die Größen $\lambda_X$ und $\lambda_Y$ jeweils die radioaktive Zerfallskonstante des Hauptisotops X bzw. die radioaktive Zerfallskonstante des Unreinheits-Isotops Y sind und $F_X$ und $F_Y$ jeweils ein Zerfalls-Verzweigungs-Verhältnis von für eine Aktivitätsmessung des Haupt-Isotops verwendetem Isotop bzw. ein Zerfalls-Verzweigungs-Verhältnis von für eine Aktivitätsmessung des Unreinheits-Isotops verwendetem Isotop darstellen, **dadurch gekennzeichnet, dass** das Verfahren die folgenden Stufen bzw. Schritte umfasst:

-- mit Hilfe einer in einer gegebenen Messanordnung angeordneten spektometrischen Messbank erfolgt eine Messung einer klar-eindeutigen Fläche S (E1) eines ersten Gamma-Pics des spaltbaren Materials bei einer ersten Energie E1 sowie eine Messung einer klar-eindeutigen Fläche S (E2) eines zweiten Gamma-Pics des spaltbaren Materials bei einer zweiten Energie E2,
-- mit Hilfe von punktuellen Referenzquellen in der gegebenen Messkonfiguration erfolgt eine Bestimmung eines Referenzwerts eines Totalabsorptionsbetrags $R_0^P$(E1) bei der ersten Energie E1, und die Bestimmung eines Referenzwerts eines Totalabsorptionsbetrags $R_0^P$ (E2) bei der zweiten Energie E2, sowie
-- mit Hilfe eines Rechners in der gegebenen Messkonfiguratiom erfolgt eine Berechnung einer integralen Wert- bzw. Ausbeute-Übertragung T (E1) der spaltbaren Materie bei der ersten Energie R1 und eine Berechnung einer integralen Wert- bzw. Ausbeuteübertragung T (E2) der spaltbaren Materie bei der zweiten Energie E2, sowie
-- mit Hilfe eines Rechners erfolgt die Berechnung des Isotopen-Verhältnisses R spaltbarer Materie mittels der Gleichung:

$$R = \frac{\lambda_X}{\lambda_Y} \times \frac{S(E_2)}{S(E_1)} \times \frac{I_\gamma(E_1)}{I_\gamma(E_2)} \times \frac{R_0^P(E_1)}{R_0^P(E_2)} \times \frac{T(E_1)}{T(E_2)} \times \frac{F_X}{F_Y}$$

2. Verfahren nach Anspruch 1, bei welchem die Messungen von klar-eindeutiger Oberfläche des spaltbaren Materials vor dem Einbringen des spaltbaren Materials in die Spaltungskammer auf bzw. an einer Probe des zur Ausrüstung bzw. Beschickung der Spaltungskammer bestimmtem Blocks spaltbarer Materie erfolgen.

3. Verfahren nach Anspruch 1, bei welchem die Messungen von klar-eindeutiger Oberfläche des spaltbaren Materials vor dem Einbringen des spaltbaren Materials in die Spaltungskammer auf bzw. an dem zur Ausrüstung bzw. Beschickung der Spaltungskammer bestimmten Block spaltbarer Materie erfolgen.

4. Verfahren nach Anspruch 1, bei welchem die Messungen von klar-eindeutiger Oberfläche des spaltbaren Materials nach dem Einbringen des spaltbaren Materials in die Spaltungskammer auf bzw. an der Spaltungskammer als Ganzer erfolgen.

5. Verfahren nach einem beliebigen der vorhergehenden Ansprüche, bei welchem das Hauptisotop Uran $^{238}$U und das Unreinheits-Isotop Uran $^{235}$U ist.

6. Verfahren nach einem beliebigen der vorhergehenden Ansprüche, bei welchem die Verfahrensstufen der Messung klar-eindeutiger Oberfläche eine Dauer im Bereich zwischen einer Stunde und zehn Wochen einnehmen.

## Claims

1. A method for determining the isotope ratio of fissile material contained in a fission chamber, where the fissile material has a main isotope X and at least one impurity isotope Y, and where isotopes X and Y have radioactive decays according to the following two equations:

X -> X' **characterised by** $\lambda_X$, $F_X$, and
Y -> Y' **characterised by** $\lambda_Y$, $F_Y$,

where X' and Y' are respective "daughter" isotopes of isotopes X and Y, where the decay of isotope X (respectively Y) is **characterised by** the emission of a gamma particle by daughter isotope X' (respectively Y') at an energy $E_1$ (respectively $E_2$) with a probability of emission $I\gamma(E_1)$ (respectively $I\gamma(E_2)$), where magnitudes $\lambda_X$ and $\lambda_Y$ are, respectively, the radioactive decay constant of main isotope X and the radioactive decay constant of impurity isotope Y,

and where $F_X$ and $F_Y$ are, respectively, an isotope decay branching ratio used for a measurement of main isotope activity and an isotope decay branching ratio used for a measurement of impurity isotope activity, **characterised in that** it includes the following steps:

- measurement, using a spectrometry bench put in a given measurement configuration, of a net area $S(E_1)$ of a first gamma peak of the fissile material at a first energy $E_1$ and of a net area $S(E_2)$ of a second gamma peak of the fissile material at a second energy $E_2$,
- determination, using reference point sources, in the given measurement configuration, of a total reference absorption efficiency $R_0^P(E_1)$ at first energy $E_1$ and of a total reference absorption efficiency $R_0^P(E_2)$ at second energy $E_2$,
- calculation, using a computer, in the given measurement configuration, of a total efficiency transfer $T(E_1)$ of the fissile material at first energy $E_1$ and of a total efficiency transfer $T(E_2)$ of the fissile material at second energy $E_2$, and
- calculation, using a computer, of the isotope ratio of fissile material R using the following equation:

$$R = \frac{\lambda_X}{\lambda_Y} \times \frac{S(E_2)}{S(E_1)} \times \frac{I_Y(E_1)}{I_Y(E_2)} \times \frac{R_0^P(E_1)}{R_0^P(E_2)} \times \frac{T(E_1)}{T(E_2)} \times \frac{F_X}{F_Y}$$

**2.** A method according to claim 1, in which the measurements of net area of the fissile material are made, before the fissile material is introduced into the fission chamber, on a sample of the block of fissile material intended to be installed in the fission chamber.

**3.** A method according to claim 1, in which the measurements of net area of the fissile material are made, before the fissile material is introduced into the fission chamber, on the block of fissile material intended to be installed in the fission chamber.

**4.** A method according to claim 1, in which the measurements of net area of the fissile material are made, after the fissile material is introduced into the fission chamber, on the fission chamber in its entirety.

**5.** A method according to any of the previous claims, in which the main isotope is Uranium $^{238}U$ and the impurity isotope is Uranium $^{235}U$.

**6.** A method according to any of the previous claims, in which the duration of the steps of measurement of net area is between one hour and ten weeks.

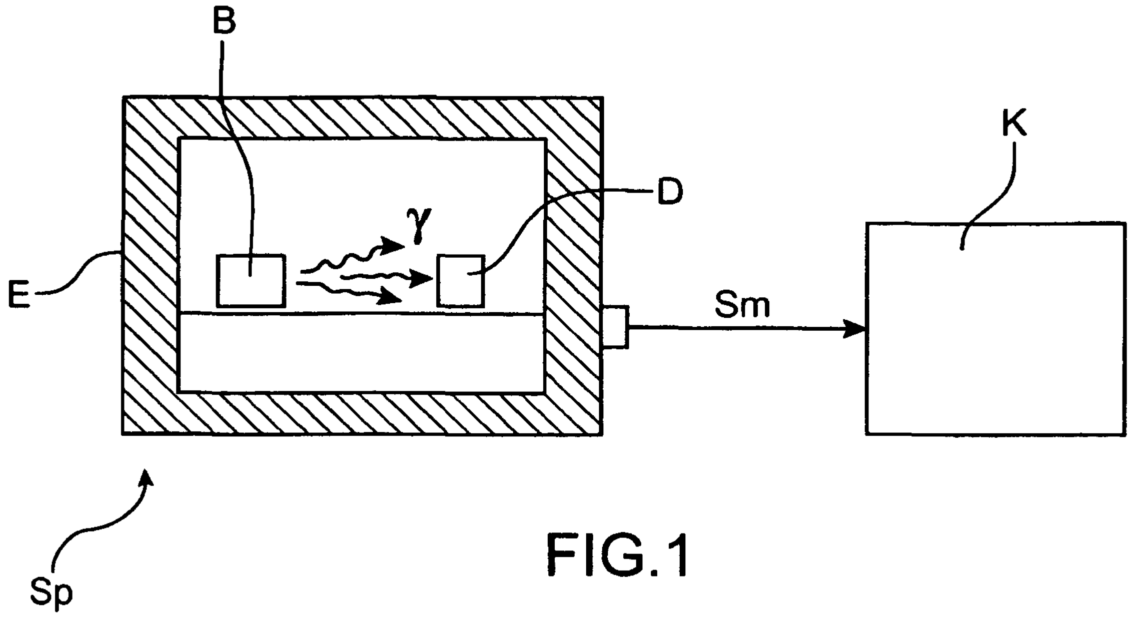


FIG.1

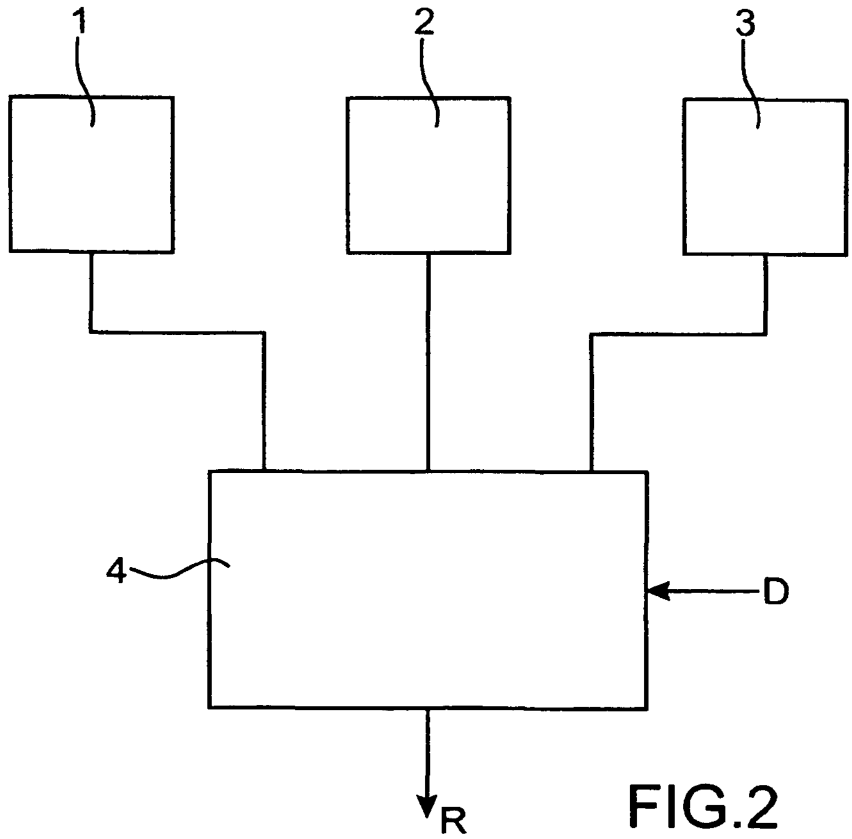


FIG.2

FIG.3

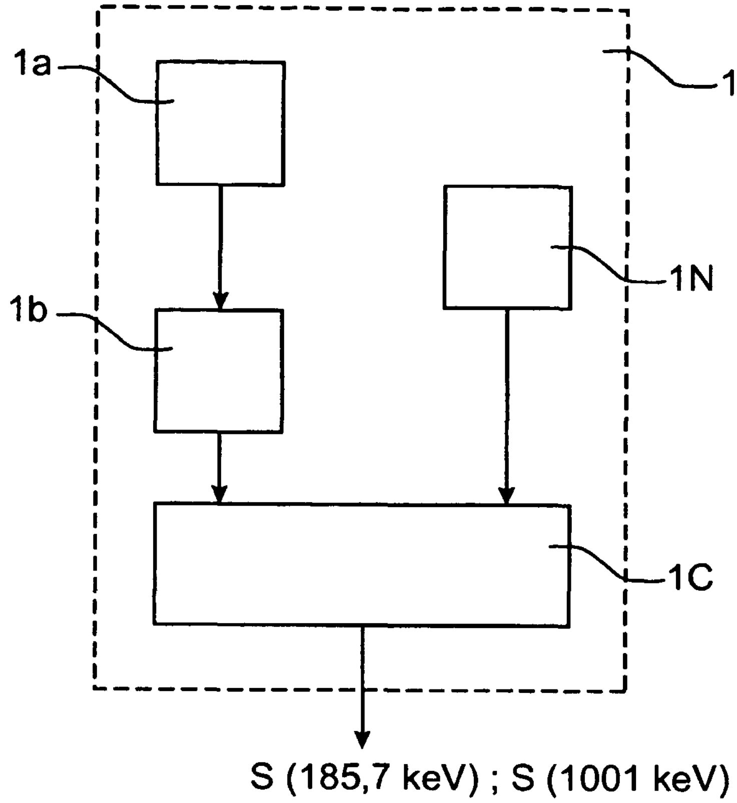
1a
1b
1
1N
1C
S (185,7 keV) ; S (1001 keV)

FIG.4

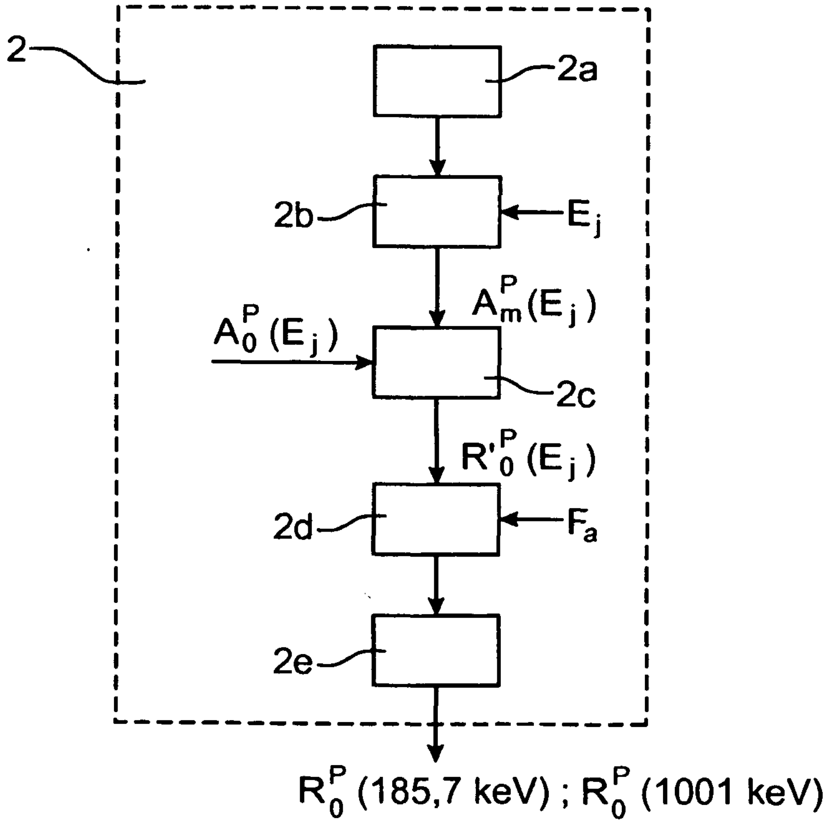
2
2a
2b
$E_j$
$A_m^P(E_j)$
$A_0^P(E_j)$
2c
$R'^P_0(E_j)$
2d
$F_a$
2e
$R_0^P$ (185,7 keV) ; $R_0^P$ (1001 keV)

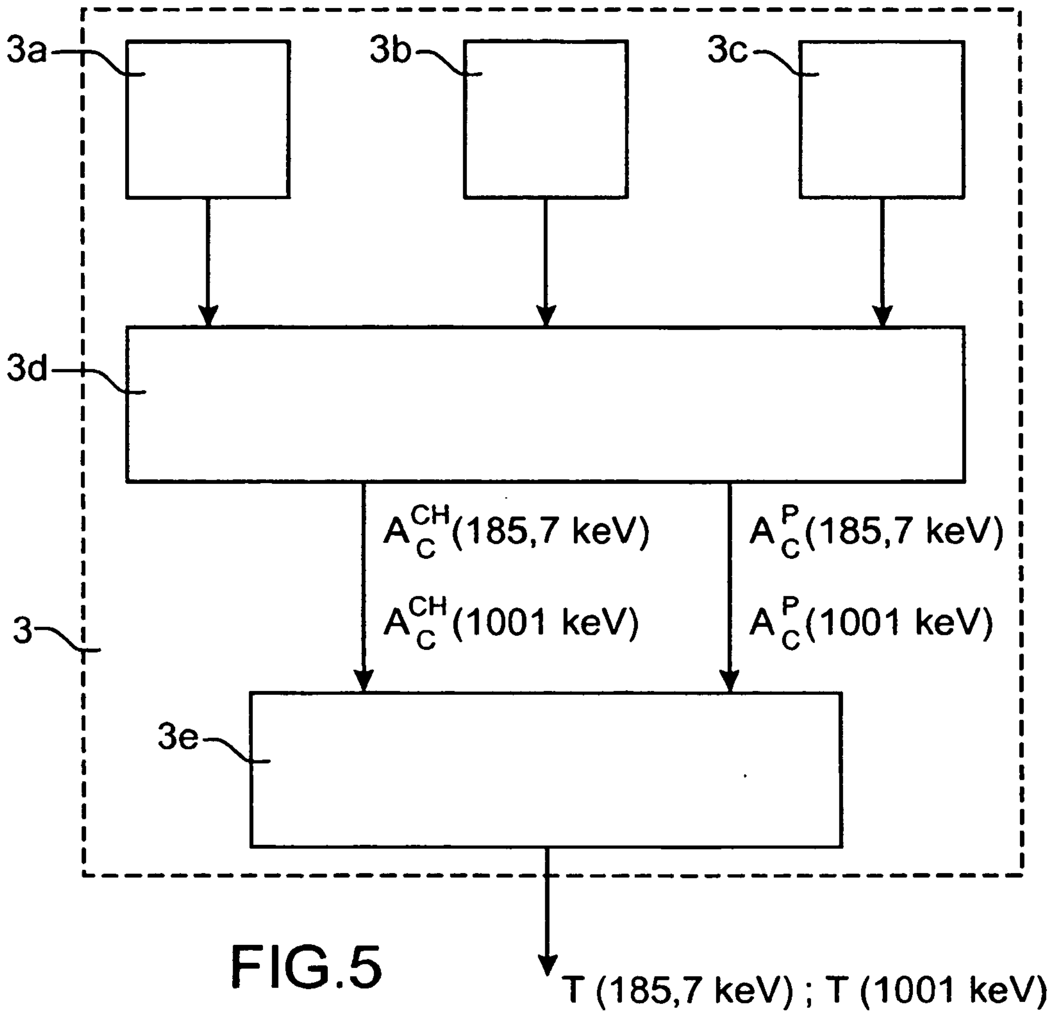
3a
3b
3c
3d
3
3e
$A_C^{CH}$(185,7 keV)
$A_C^{CH}$(1001 keV)
$A_C^{P}$(185,7 keV)
$A_C^{P}$(1001 keV)
T (185,7 keV) ; T (1001 keV)

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **DE BOUCHARD et al.** The burn-up and fuel cycle aspects of LMFBR physics assessment. *Progress in Nuclear Energy,* 1985, vol. 16 (3), 251-285